# FASCICULE DE BREVET EUROPEEN

(11) **EP 1 094 579 B1**
(45) Date de publication et mention de la délivrance du brevet: **05.10.2011**
(21) Numéro de dépôt: 00402740.5
(22) Date de dépôt: 05.10.2000
(51) Int. Cl.: H02G 3/04, H02G 3/30, H02B 1/00, H02G 3/12, H02G 3/10

(54) **Support pour le montage d'au moins un appareillage électrique sur une goulotte pour câbles et/ou conducteurs**
Gerätehalter zur Befestigung mindestens eines elektrischen Geräts auf einem Kabelkanal
Support for mounting at least an electrical apparatus on a cable duct

(30) Priorité: 22.10.1999 FR 9913209
(43) Date de publication de la demande: 25.04.2001
(73) Titulaire: Legrand France, 87000 Limoges (FR); Legrand SNC, 87000 Limoges (FR)
(72) Inventeur: Gautier, Bruno, 72140 Sille le Guillaume (FR)
(74) Mandataire: Santarelli

(56) Documents cités:
- EP-A- 0 600 109
- EP-A- 0 616 403
- WO-A-96/11518
- FR-A- 2 669 175
- FR-A- 2 709 614
- US-A- 4 723 746

## Description

La présente invention concerne un support pour le montage d'au moins un appareillage électrique sur une goulotte pour câbles et/ou conducteurs.

On connaît des supports pour le montage d'un ou plusieurs appareillages électriques sur une goulotte renfermant des câbles et/ou conducteurs dont l'un au moins doit être raccordé audit appareillage, cette goulotte comprenant un socle à retours dirigés l'un vers l'autre ayant deux bords longitudinaux libres et le support comportant une embase pourvue de moyens pour sa fixation sur le socle de la goulotte et de moyens de réception de l'appareillage.

Un tel support est par exemple décrit dans le document EP 0 616 403 A1. Toutefois, le support présenté dans ce document comporte un grand nombre de pièces, ce qui complique sa fabrication et, surtout, rend son assemblage long et complexe. En outre, les moyens de fixation de l'embase sur le socle de la goulotte comportent des parties qui s'étendent à l'intérieur du socle de la goulotte et qui réduisent sensiblement le volume interne de la goulotte normalement réservé au passage des câbles. Enfin, le support comporte un capot de protection des appareillages, qui est rapporté sur l'embase par des moyens d'encliquetage peu fiables, qui, à l'usage, laissent apparaître des jeux dans le montage de ce capot.

Par ailleurs, il a été proposé dans le document FR 2 669 175 un support situé entièrement au-dessus du socle de la goulotte, sans faire saillie à l'intérieur de celui-ci. Toutefois, la façon dont le support est rapporté sur la goulotte n'y est pas clairement explicitée et fait en tout état de cause intervenir plusieurs pièces distinctes, ce qui rend la fabrication et l'assemblage du support compliqués. En outre, les câbles destinés à être raccordés aux appareillages portés par le support doivent être passés au travers d'orifices réalisés à cet effet dans l'embase du support. Cette contrainte rend le câblage de l'appareillage particulièrement contraignant et malcommode. Il en est ainsi notamment du fait que les conducteurs, relativement rigides, doivent suivre un chemin sinueux pouvant comporter, localement, de fortes courbures.

Les documents EP 0 600 109, FR 2 709 614 et WO 96/11518 divulguent un support de fixation pour un appareillage électrique sur une goulotte, comportant une embase pourvue de moyens pour sa fixation sur la goulotte et de moyens de fixation de l'appareillage électrique. Le but de l'invention est de proposer un support pour le montage d'appareillages électriques sur une goulotte, de structure simple et compacte, n'empiétant pas sur le volume intérieur de la goulotte réservé au logement des câbles, et dont la manipulation et l'installation sur la goulotte soient simples et fiables.

En vue de la réalisation de ce but, on prévoit selon l'invention un support pour le montage d'au moins un appareillage électrique sur une goulotte pour câbles et/ou conducteurs, cette goulotte comprenant un socle à retours dirigés l'un vers l'autre ayant deux bords longitudinaux libres et le support comportant une embase pourvue de moyens pour sa fixation sur le socle de la goulotte et de moyens de réception de l'appareillage, l'embase, avec ses moyens de fixation et ses moyens de réception, étant réalisée en une seule pièce sous la forme d'une platine ayant deux premiers bords opposés sur lesquels est ménagée au moins une première partie des moyens de fixation qui coopère avec les bords longitudinaux libres du socle de la goulotte, une face inférieure qui, après fixation du support sur le socle de la goulotte, est située en regard dudit socle, et une face supérieure opposée sur laquelle sont ménagés les moyens de réception. Les moyens de réception sont réalisés sous la forme d'au moins un rail venu de matière avec le reste de la platine, en saillie de la face supérieure de celle-ci, et aux deux premiers bords opposés de la platine sont ménagées deux ailes s'étendant perpendiculairement à et en saillie de la face supérieure de la platine et présentant une face intérieure et une face extérieure qui porte la première partie des moyens de fixation.

La platine monobloc ainsi obtenue assure une liaison d'interface mécanique entre l'appareillage et la goulotte pour la fixation directe de la platine sur le socle de la goulotte, sans pièce intermédiaire, cette liaison directe au moyen d'une seule pièce (la platine) est obtenue grâce à l'utilisation des bords longitudinaux libres des retours du socle de la goulotte sur lesquels les moyens de fixation de la platine viennent prendre en prise. De plus, cette simplicité de liaison entre la platine et le socle de la goulotte, dont les moyens sont localisés sur les deux premiers bords opposés de la platine, permet de disposer du reste de la platine pour ménager, d'un seul tenant avec celle-ci, les moyens de réception de l'appareillage. Ces moyens de réception étant situés exclusivement en saillie de la face supérieure de la platine, la face inférieure de cette platine est laissée vierge de tout élément de saillie et n'empiète donc pas sur l'espace intérieur de la goulotte réservé aux câbles.

Selon une caractéristique avantageuse de l'invention, la première partie des moyens de fixation est réalisée sous la forme de moyens de rainure ménagés sur chacun des deux premiers bords opposés de la platine pour venir en prise avec les bords longitudinaux libres du socle de la goulotte. On obtient ainsi par des moyens simples et peu encombrants la fixation efficace et rapide de la platine sur le socle de la goulotte.

Avantageusement, le rail de réception s'étend perpendiculairement aux deux premiers bords opposés de la platine sur lesquels est ménagée la première partie des moyens de fixation. En effet, les appareillages susceptibles d'être rapportés sur un tel rail possèdent généralement des bornes de raccordement qui reçoivent les câbles selon une direction perpendiculaire audit rail. Par conséquent, lorsque la platine est fixée sur le socle de la goulotte par ses deux premiers bords opposés, le rail de réception de l'appareillage s'étend perpendiculairement à la direction longitudinale de la goulotte aussi bien que les câbles se présentent bien perpendiculairement au rail, c'est-à-dire suivant la direction privilégiée de raccordement de l'appareillage.

Avantageusement, les rails de réception s'étendent entre les faces intérieures des ailes de la platine. Avantageusement encore, dans le cas où les moyens de fixation sont réalisés sous la forme de moyens de rainure, la première partie des moyens de fixation est constituée par deux séries de pattes venues de matière en saillie de la face extérieure de chacune des ailes de la platine, suivant deux plans parallèles à la platine et distants l'un de l'autre d'une hauteur d'écartement correspondant sensiblement à l'épaisseur des bords longitudinaux libres du socle de la goulotte.

Selon une autre caractéristique avantageuse de l'invention, la platine possédant deux seconds bords opposés sensiblement perpendiculaires à ses deux premiers bords opposés, les moyens de fixation de la platine sur le socle de la goulotte comportent une seconde partie qui est ménagée au voisinage des seconds bords opposés de cette platine. Il est ainsi possible de fixer la platine sur le socle de goulotte indifféremment par ses premiers ou seconds bords opposés. Ceci est utile dans certains cas où l'on souhaite donner une orientation particulière, notamment transversale, à l'appareillage par rapport à la direction longitudinale de la goulotte.

Avantageusement alors, la seconde partie des moyens de fixation est réalisée sous la forme de moyens de rainure ménagés au voisinage de et parallèlement à chacun des deux seconds bords opposés de la platine pour venir en prise avec les bords longitudinaux libres du socle de la goulotte. Les seconde et première parties des moyens de fixation sont ainsi homogènes et, en outre, la réalisation de ces moyens sous la forme de moyens de rainure est, comme mentionné plus haut, particulièrement simple et efficace.

Avantageusement encore, dans le cas où la platine possède deux ailes ménagées à ses deux premiers bords opposés, la seconde partie des moyens de fixation est ménagée aux extrémités des ailes de la platine.

Avantageusement encore, toujours dans le cas où la platine possède deux ailes ménagées à ses deux premiers bords opposés, les deux ailes de la platine possèdent des extrémités qui débordent des seconds bords opposés de cette platine pour ménager entre elles des passages pour les câbles à raccorder aux appareillages. Ces passages de câbles sont utiles quelle que soit l'orientation avec laquelle la platine est fixée sur le socle de la goulotte.

Selon une autre caractéristique avantageuse de l'invention, le support comporte également un capot en forme de cloche sensiblement parallélépipédique comprenant une plaque de façade rectangulaire bordée par une jupe ayant quatre côtés opposés deux à deux, dont deux côtés opposés possédant un bord libre pourvu de moyens d'encliquetage agencés pour coopérer avec des moyens d'encliquetage homologues ménagés sur la platine, d'un seul tenant avec celle-ci. Le support forme ainsi lorsque le capot est rapporté sur la platine un boîtier entièrement ou partiellement fermé protégeant l'appareillage dont il réalise le montage sur la goulotte.

Avantageusement alors, dans le cas où la platine possède deux ailes ménagées à ses deux premiers bords opposés, les moyens d'encliquetage de la platine sont portés par les ailes de la platine.

Plus précisément, les moyens d'encliquetage du capot comportent, pour chacun des deux côtés opposés de la jupe dudit capot, au moins une patte ayant une extrémité libre en forme de dent agencée pour être reçue dans un logement correspondant ménagé sur le bord correspondant de la platine, ce logement comportant un côté dans lequel est ménagée une encoche avec laquelle la dent de ladite patte vient en prise et un côté opposé pourvu d'une lame de rappel élastique agissant sur ladite patte pour maintenir la dent en prise dans l'encoche. La lame de rappel élastique possède une extrémité présentant une face oblique coopérant avec le bord correspondant d'un évidement ménagé dans la patte du capot pour exercer une fonction de double rattrapage de jeu, à la fois parallèlement au plan de la platine et perpendiculairement à ce plan.

Selon une autre caractéristique avantageuse de l'invention, dans le cas où le support comporte un capot et où les ailes de la platine débordent des seconds bords opposés de cette platine pour ménager des passages de câbles, la goulotte comportant un couvercle en forme de bande ayant des bords longitudinaux joints aux bords longitudinaux libres du socle de la goulotte, le support comporte deux barrettes s'étendant entre les extrémités des ailes de la platine, le long et à distance des seconds bords opposés de la platine, pour réaliser une jointure entre le capot et le couvercle de la goulotte tout en laissant libre au moins une partie des passages de câbles.

Avantageusement alors, chacune des barrettes est constituée par une cornière comprenant une première branche engagée derrière le bord libre du côté correspondant du capot et une seconde branche ayant un bord longitudinal de contact avec le bord terminal du couvercle de la goulotte.

Avantageusement encore, chacune des barrettes possède des extrémités pourvues de moyens d'emboîtement coopérant avec des moyens d'emboîtement homologues ménagés sur les extrémités des ailes de la platine.

D'autres caractéristiques et avantages de l'invention apparaîtront à la lecture de la description qui suit d'un mode de réalisation particulier donné à titre d'exemple non limitatif.

Il sera fait référence aux dessins en annexe, parmi lesquels :
- la figure 1 est une vue en perspective éclatée d'un support conforme à l'invention ;
- la figure 2 est une vue en perspective du support de la figure 1, coupé par un plan perpendiculaire aux deux premiers bords opposés de la platine ;
- la figure 3 est une vue en coupe dans le même plan de coupe que la figure 2 ;
- la figure 4 est une vue en coupe dans le plan IV-IV de la figure 3 ;
- les figures 5 à 10 sont des vues en perspective illustrant les différentes étapes du montage d'appareillages électriques sur une goulotte pour câbles et/ou conducteurs au moyen du support des figures 1 à 4.

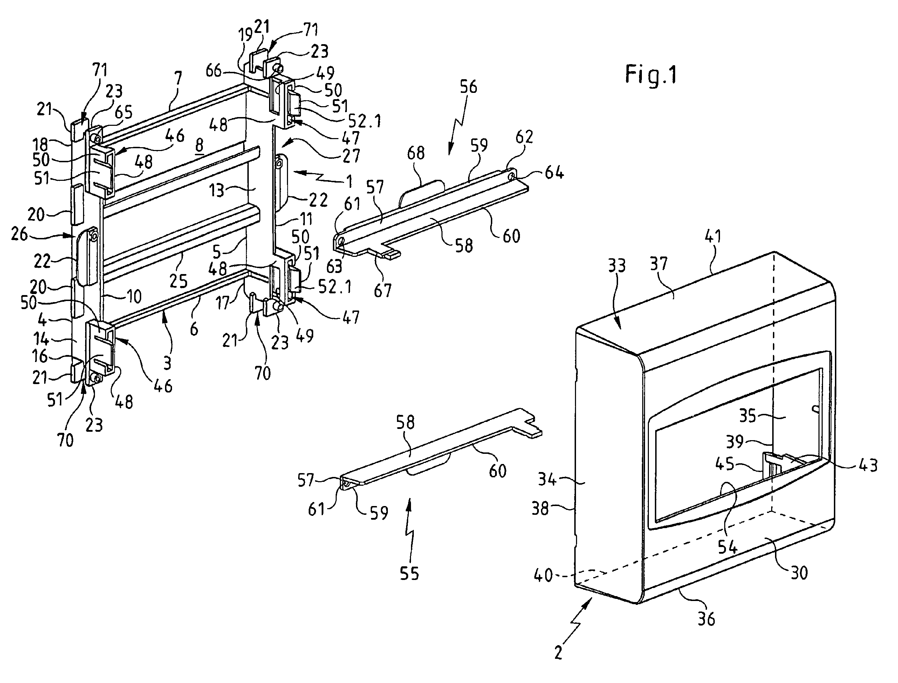

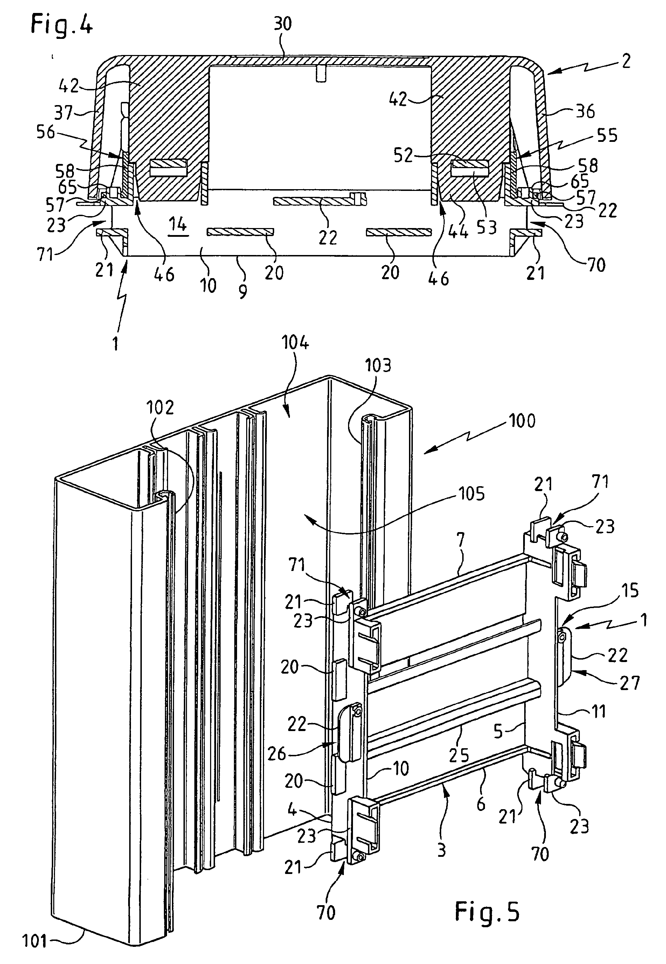

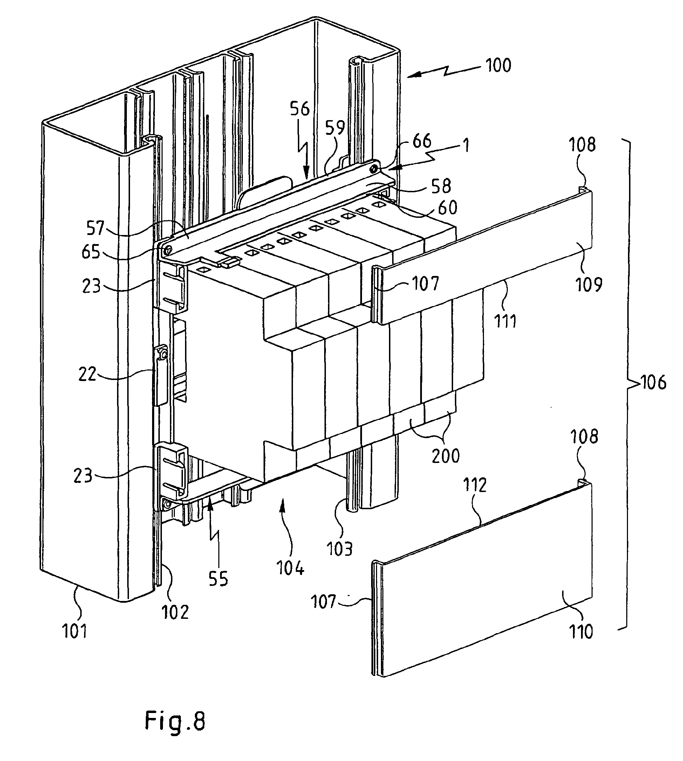

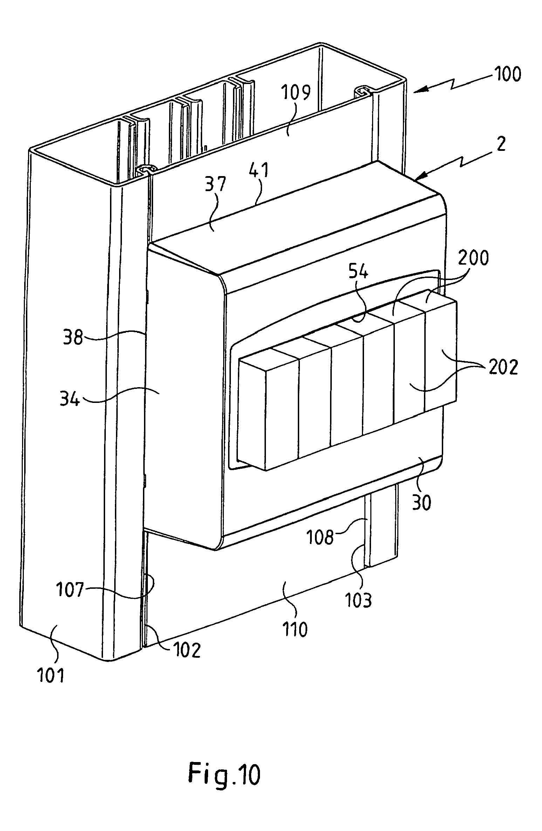

En référence aux figures, et en particulier à la figure 1, un support conforme à l'invention comporte principalement une embase 1 possédant des moyens pour sa fixation sur le socle d'une goulotte pour câbles et/ou conducteurs telle que la goulotte 100 illustrée aux figures 5 à 10 qui sera décrite plus en détail ultérieurement et un capot 2.

L'embase 1 revêt la forme d'une platine comprenant un plateau central 3 à contour sensiblement rectangulaire, présentant deux premiers bords opposés 4, 5 et deux seconds bords opposés 6, 7. On distingue également pour ce plateau 3 une face supérieure 8 et une face inférieure 9.

La platine d'embase 1 comporte de plus deux ailes latérales 10, 11 qui sont ménagées le long des deux premiers bords opposés 4, 5 du plateau central 3 et qui s'étendent perpendiculairement à et en saillie de la face supérieure 8 de ce plateau. Chacune des ailes 10, 11 présente une face intérieure 12, 13 et une face extérieure 14, 15.

En outre, les ailes 10, 11 possèdent des portions d'extrémité 16, 17 et 18, 19 qui débordent respectivement des seconds bords opposés 6 et 7 du plateau central 3. La platine 1 présente ainsi, vue de dessus, une forme générale de H délimitant, entre les portions d'extrémité 16, 17, 18, 19 des ailes 10, 11 et les seconds bords opposés 6, 7 du plateau central 3, des zones de passage pour des câbles et/ou conducteurs, comme cela sera mieux expliqué ultérieurement.

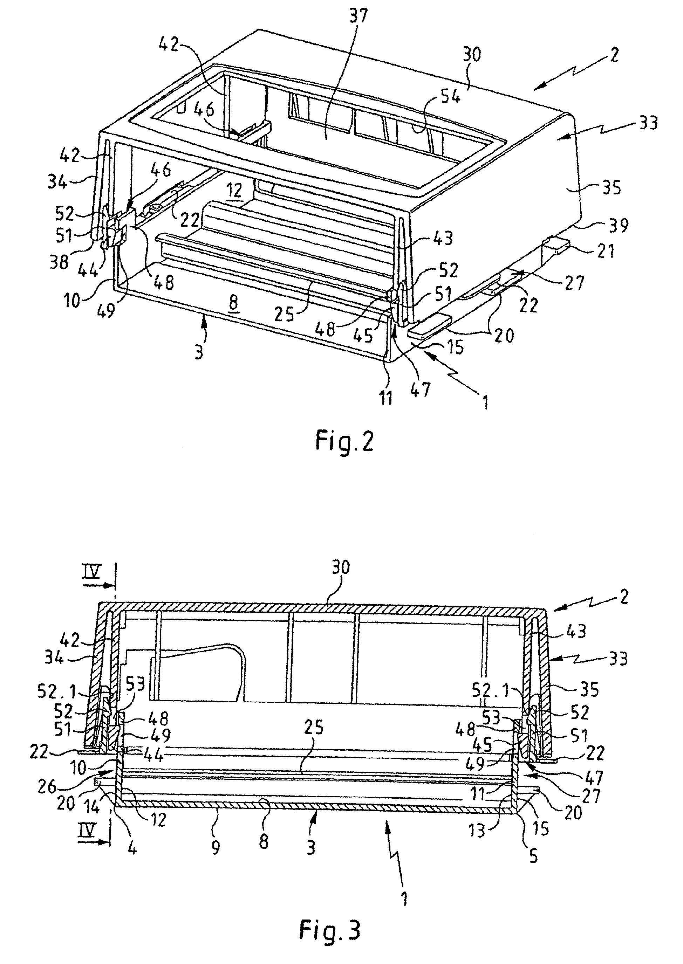

Les faces extérieures 14, 15 des ailes 10, 11 portent une première partie des moyens de fixation de la platine 1. Cette première partie des moyens de fixation est ici réalisée sous la forme de moyens de rainure comportant deux séries de pattes, l'une supérieure l'autre inférieure, venues de matière en saillie de la face extérieure 14, 15 de chacune des ailes 10, 11 de la platine 1, suivant deux plans parallèles au plateau central 3 et distants l'un de l'autre d'un certain écartement. La série inférieure de pattes est agencée dans un plan situé légèrement au-dessus de la face supérieure 8 du plateau central 3, conformément à la représentation de la figure 3. Cette série inférieure comporte plus précisément deux pattes 20 agencées de part et d'autre du milieu de l'aile 10, 11 correspondante et deux pattes 21 ménagées aux extrémités des ailes 10, 11. La série supérieure de pattes est quant à elle agencée dans un plan situé au-dessus du plan de la série inférieure de pattes 20, 21. Cette série supérieure comporte plus précisément une patte centrale 22 ménagée sensiblement au milieu des ailes 10, 11 et deux pattes d'extrémité 23 ménagées aux extrémités des ailes 10, 11.

On comprend que, de la sorte, la série inférieure de pattes 20, 21 et la série supérieure de pattes 22, 23 définissent une rainure sur chacune des ailes 10, 11, parallèlement aux premiers bords opposés 4, 5 du plateau central 3. Les rainures ainsi délimitées sur les deux ailes 10, 11 seront appelées ci-après premières rainures et sont référencées en 26, 27 en correspondance respectivement avec les ailes 10, 11.

Par ailleurs, les pattes d'extrémité 21, 23 s'étendent non seulement en saillie de la face extérieure 14, 15 de chacune des ailes 10, 11, mais également en saillie de la face terminale des portions d'extrémité 16, 17, 18, 19 de ces ailes, suivant la direction longitudinale de ces ailes, c'est-à-dire suivant la direction des premiers bords opposés 4, 5 du plateau central 3. Les pattes d'extrémité 21, 23 délimitent ainsi parallèlement à et au voisinage de chacun des seconds bords opposés 6, 7 du plateau central 3 des secondes rainures 70, 71. Ces moyens de rainure, associés aux seconds bords opposés 6, 7 du plateau central 3 (bien que légèrement distants de ceux-ci du fait du débordement des portions d'extrémité 16, 17, 18, 19 des ailes 10, 11 par rapport aux seconds bords opposés 6, 7 du plateau central 3), constituent une seconde partie des moyens de fixation de la platine 1 sur le socle de goulotte selon une configuration pivotée de 90° par rapport à celle obtenue avec la première partie des moyens de fixation associée aux premiers bords opposés 4, 5, comme cela sera mieux expliqué ultérieurement.

La réception du ou des appareillages électriques sur la platine d'embase 1 est réalisée au moyen d'un rail 25 ménagé en relief de la face supérieure 8 du plateau central 3 et s'étendant perpendiculairement aux premiers bords opposés 4, 5 du plateau central 3, sensiblement au milieu de ce plateau, c'est-à-dire à équidistance des seconds bords opposés 6, 7 de ce plateau. En outre, le rail 25 possède deux extrémités qui se raccordent aux faces intérieures 12, 13 des ailes 10, 11.

L'ensemble de la platine d'embase 1, avec son plateau central 3, ses ailes 10, 11 équipées des pattes de fixation 20, 21, 22, 23 et son rail de réception 25, est réalisé en une seule pièce, par exemple en matière plastique moulée.

Le capot 2 du support est quant à lui constitué par une pièce monobloc séparée de la platine d'embase 1 et possède des moyens pour sa liaison rapide et amovible à cette platine. Le capot 2 se présente ici sous la forme d'une cloche sensiblement parallélépipédique comprenant une plaque supérieure de façade 30 de contour rectangulaire, bordée par une jupe 33 légèrement évasée ayant quatre côtés opposés deux à deux, dont deux côtés opposés 34, 35 et deux autres côtés opposés 36, 37. Ces quatre côtés 34, 35, 36, 37 possèdent respectivement des bords libres rectilignes 38, 39, 40, 41 qui sont jointifs deux à deux à leurs extrémités et qui définissent une bordure de base du capot 2 en forme de cloche.

Les deux côtés 34, 35 de la jupe 33 du capot 2 sont doublés intérieurement chacun au voisinage de leurs deux extrémités par deux pattes 42, 43 possédant chacune une extrémité libre 44, 45 en forme de dent qui est agencée pour être reçue dans un logement correspondant 46, 47 ménagé au voisinage des extrémités de l'aile correspondante 10, 11 de la platine 1. Chacun des logements 46, 47 comporte un côté 48 dans lequel est ménagée une encoche 49 avec laquelle la dent 44 de la patte 42, 43 correspondante vient en prise, et un côté opposé 50 pourvu d'une lame de rappel élastique 51 agissant sur la patte 42, 43 concernée pour maintenir la dent 44 ménagée à l'extrémité de cette patte en prise avec l'encoche 49.

Comme cela est mieux visible sur la figure 3, la lame de rappel élastique 51 possède elle-même une extrémité 52 en forme de dent présentant une face oblique 52.1 qui coopère avec le bord correspondant, c'est-à-dire le bord supérieur, d'un évidement 53 ménagé dans la patte 42, 43 concernée du capot 2. La face oblique 52.1 de la lame de rappel élastique 51 agit ainsi à la façon d'une rampe sur la patte 42, 43 concernée du capot 2 en exerçant sur cette patte une force de rappel ayant à la fois une composante perpendiculaire à cette patte, c'est-à-dire tendant à plaquer la dent 44 dans l'encoche 49 de la platine 1, et une composante parallèle à la patte 42, 43 tendant à soulever le capot 2, c'est-à-dire à l'écarter de la platine 1 pour plaquer la dent 44 en appui contre le bord supérieur de l'encoche 49. On comprend que, de la sorte, la face oblique ou rampe 52.1 de la lame de rappel élastique 51 exerce une fonction de double rattrapage de jeu dans la liaison du capot 2 à la platine 1, à la fois parallèlement au plan de la platine 1 et perpendiculairement à ce plan. En outre, la liaison du capot 2 avec la platine 1 en est grandement fiabilisée. On notera à cet égard que, même si la dent d'extrémité 44 de la patte 42, 43 s'échappe accidentellement de sa prise avec l'encoche 49, la patte 42, 43 est encore retenue par la butée du bord inférieur de l'évidement 53 de la patte 42, 43 contre la dent d'extrémité 52 de la lame 51.

Une ouverture rectangulaire 54 est ménagée dans la plaque de façade 30 pour former une fenêtre d'accès et/ou de visualisation du ou des appareillages reçus sur la platine 1, comme cela sera mieux expliqué ultérieurement.

Le support comporte enfin deux barrettes 55, 56 identiques qui sont rapportées de façon amovible sur la platine 1 en s'étendant entre les extrémités des ailes 10, 11 de cette platine, le long et à distance des seconds bords opposés 6, 7 du plateau central 3, pour réaliser une certaine jointure entre le capot 2 et la goulotte 100, comme cela sera mieux expliqué ultérieurement.

En l'espèce, chacune des barrettes 55, 56 est constituée par une cornière comprenant deux branches 57, 58 formant entre elles un angle droit et possédant respectivement un bord longitudinal libre rectiligne 59, 60. La branche 57 possède à ses deux extrémités, d'une part, deux encoches 61, 62 ménagées en renfoncement de la face de la branche 57 qui est opposée à la branche 58 pour épouser les pattes supérieures d'extrémité 23 des ailes 10, 11 de la platine 1, et, d'autre part, deux trous 63, 64 agencés pour s'engager sur des ergots 65, 66 ménagés en saillie de la face supérieure des pattes 23.

Une patte d'attache 67 est ménagée en saillie du bord longitudinal libre 60 de la branche 58 à chacune des barrettes 55, 56 pour coopérer avec le côté correspondant 36, 37 de la jupe 33 du capot 2. De même, une patte 68 est ménagée en saillie du bord longitudinal libre 59 de la branche 57 de chacune des barrettes 55, 56 pour coopérer avec le couvercle de la goulotte 100, comme cela sera mieux expliqué ultérieurement.

En référence aux figures 5 à 10, le support qui vient d'être décrit s'utilise de la manière suivante.

D'une manière générale, la fonction du support selon l'invention est de servir d'interface mécanique pour le montage d'un ou plusieurs appareillages électriques 200 sur une goulotte 100 renfermant des câbles et/ou conducteurs (non représentés aux figures) dont certains doivent être raccordés aux appareillages 200.

La goulotte 100, dont seule une portion est représentée aux figures 5 à 10, comporte un socle 101 qui présente ici un profil en forme générale de C et qui possède ainsi deux retours dirigés l'un vers l'autre ayant deux bords longitudinaux libres 102, 103. Le socle 101 délimite ainsi un volume intérieur 104 dans lequel sont logés les câbles et/ou conducteurs (non représentés) auxquels il est possible d'accéder par la large ouverture 105 qui s'étend tout le long du socle 101 entre ses bords longitudinaux libres 102, 103. Cette ouverture d'accès 105 peut toutefois être obturée par un couvercle 106 en forme de bande qui possède deux bords longitudinaux 107, 108 rabattus pour former des rebords coopérant avec des bourrelets en forme de lyre ménagés le long des bords longitudinaux libres 102, 103 du socle 101 pour réaliser une liaison jointive du couvercle 106 avec le socle 101.

En l'espèce, le couvercle 106 a été préalablement sectionné en deux parties 109, 110 et les bords sectionnés 111, 112 de ces deux parties, qui en constituent les bords transversaux terminaux, ont été écartés pour permettre l'installation du support selon l'invention sur le socle 101 de la goulotte 100.

Cette installation s'effectue de la manière suivante. Les deux parties 109 et 110 du couvercle 106 sont préalablement retirées du socle 101 de la goulotte 100. La platine 1 est fixée sur le socle 101 de la goulotte 100. A cet effet, on peut utiliser, selon l'orientation que l'on souhaite donner à la platine 1 sur la goulotte 100, la première ou la seconde partie des moyens de fixation. On notera à ce propos que, dans le cas où la platine 1 est carrée avec quatre bords d'égale longueur, elle peut être installée selon le sens souhaité sur une goulotte de largeur donnée, tandis que, dans le cas où la platine 1 est ractangulaire avec des bords adjacents de longueurs différentes, elle peut être installée sur deux goulottes de largeurs différentes correspondantes. Dans l'exemple représenté aux figures 5 à 10, c'est la première partie des moyens de fixation (premières rainures 26, 27) qui a été utilisée. Ainsi, comme représenté à la figure 5, la platine 1 est présentée face à l'ouverture 105 du socle 101 de la goulotte 100 de telle manière que ses deux premiers bords opposés 4, 5 soient parallèles à la direction longitudinale de la goulotte 100, c'est-à-dire aux bords longitudinaux libres 102, 103 du socle 101 de cette goulotte.

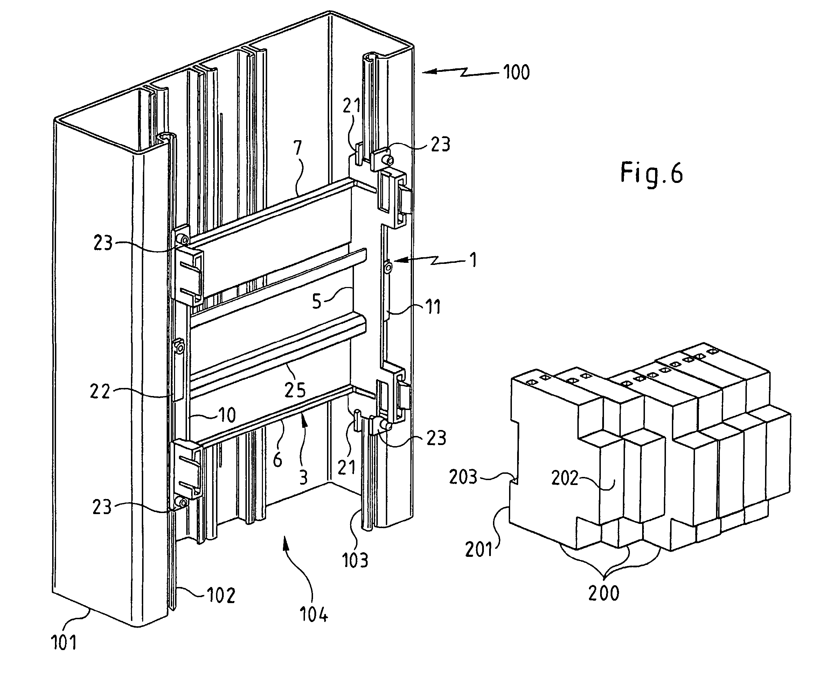

Les premières rainures 26, 27 formées par les séries supérieure et inférieure de pattes 20, 21, 22, 23 sur les faces extérieures 14, 15 des ailes 10, 11 de la platine 1 sont engagées sur les bords longitudinaux libres 102, 103 du socle 101 de la goulotte 100, comme cela est illustré par la figure 6. On notera que la largeur des rainures 26, 27 est sensiblement égale et de préférence légèrement inférieure à l'épaisseur des bourrelets ménagés le long des bords longitudinaux libres 102, 103 du socle 101 de la goulotte 100, de telle sorte que, lors de l'engagement des rainures 26, 27 sur les bourrelets des bords 102, 103 du socle 101 de la goulotte 100, ces bourrelets se compriment légèrement de manière élastique. Cette légère compression élastique des bourrelets des bords 102, 103 d'une part évite l'apparition de tout jeu de montage entre la platine 1 et le socle 101 de la goulotte 100 et d'autre part permet de réaliser une immobilisation de la platine 1 sur le socle 101 de la goulotte 100 suivant la direction longitudinale de cette goulotte, sans qu'il soit nécessaire de prévoir d'autres moyens de blocage.

En variante, dans la forme de réalisation représentée, la largeur des rainures peut être légèrement supérieure à l'épaisseur des bourrelets, et il est prévu sur la patte centrale 22 un orifice pour le passage d'une vis de blocage.

De la même manière, il serait également possible de fixer la platine 1 sur le socle 101 de la goulotte 100 par les secondes rainures 70, 71 constituant la seconde partie des moyens de fixation de la platine 1, de telle sorte que le rail de réception 25 s'étende parallèlement à la direction longitudinale de la goulotte 100.

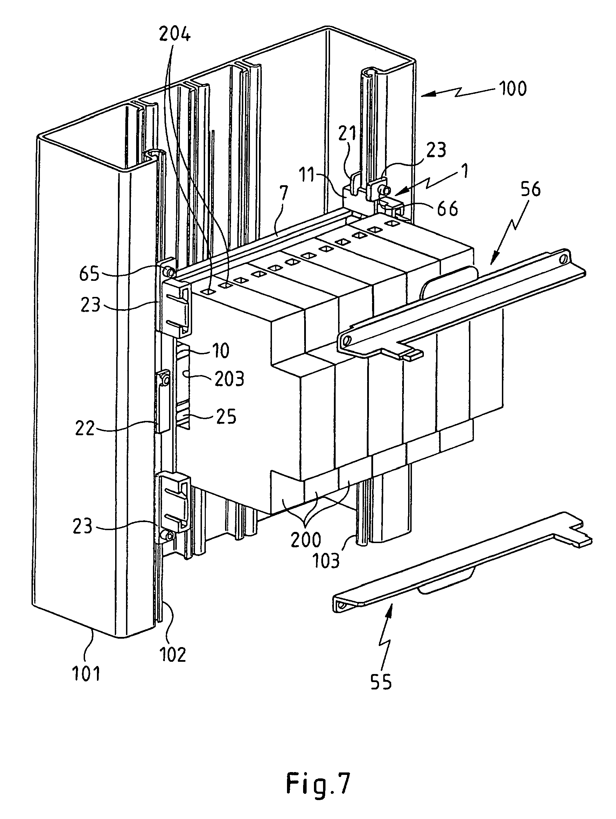

La platine 1 étant ainsi fixée sur le socle 101 de la goulotte 100, les appareillages 200 sont installés sur la platine 1. A cet effet, chacun des appareillages 200 qui se présente conformément à l'illustration des figures sous la forme d'un boîtier parallélépipédique avec une face arrière 201 et une face avant 202, présente, en renfoncement de sa face arrière 201 une encoche 203 qui est agencée pour s'engager avec le rail 25 de telle manière que la plus grande dimension de l'appareillage 200 concerné soit perpendiculaire au rail 25, c'est-à-dire parallèle au premier bord opposé 5 du plateau central 3. Par conséquent, dans l'exemple illustré sur les figures, les appareillages 200 sont montés de telle manière que leur plus grande dimension soit parallèle à la direction longitudinale de la goulotte 100, comme cela est visible sur la figure 7. Cette disposition est avantageuse car chacun des appareillages 200 possède précisément des bornes de raccordement 204 destinées à recevoir les câbles et/ou conducteurs (non représentés) suivant la direction de la plus grande dimension de l'appareillage qui, dans ce cas, se confond avec la direction longitudinale de la goulotte 100 et, par conséquent, des câbles et/ou conducteurs que cette goulotte contient.

A l'inverse, lorsque la platine 1 est montée sur le socle 101 de la goulotte 100 par la seconde partie de ses moyens de fixation, c'est-à-dire par l'engagement des secondes rainures 70, 71 associées aux seconds bords opposés 6, 7 du plateau central 3 sur les bords longitudinaux libres 102, 103 du socle 101 de la goulotte 100, les appareillages 200 se présentent de telle manière que leur plus grande dimension s'étend perpendiculairement à la direction longitudinale de la goulotte 100. Une telle disposition peut être choisie dans certains cas particuliers dépendant de la nature de l'appareillage en cause ou de l'implantation de la goulotte. On notera alors que, dans une telle configuration, les passages délimités par les portions d'extrémité des ailes 10, 11 avec les seconds bords opposés 6, 7 sont particulièrement utiles pour permettre le passage des câbles raccordés aux bornes 204 des appareillages 200, entre les seconds bords opposés 6, 7 du plateau central 3 et les bords longitudinaux correspondants 102, 103 du socle 101 de la goulotte 100.

Les appareillages 200 étant ainsi installés sur la platine 1, les barrettes de jointure 55, 56 sont montées sur la platine 1, les trous d'extrémité 63, 64 de ces barrettes recevant les ergots 65, 66 ménagés en saillie des pattes supérieures d'extrémité 23 de la platine 1. La branche 57 de chaque barrette 55, 56 s'étend entre les extrémités correspondantes des ailes 10, 11 de la platine 1 et cache partiellement l'espace de passage de câbles ménagé entre les extrémités des ailes 10, 11 et chacun des seconds bords opposés 6, 7 du plateau central 3.

On pourra prévoir en variante que les barrettes 55, 56 soient attachées à la platine 1 par des liens venus de moulage.

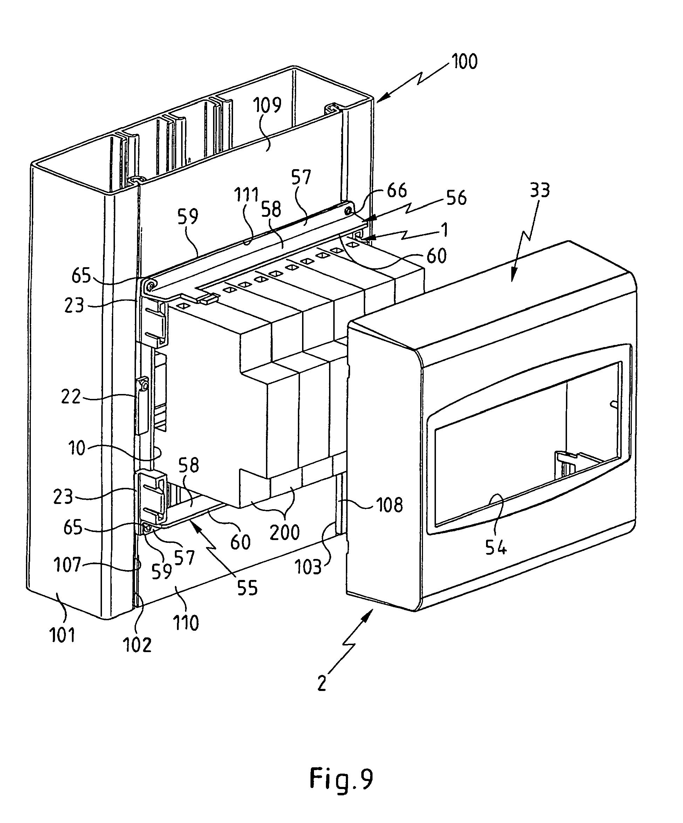

Conformément à la figure 9, les deux parties 109, 110 du couvercle 106 sont rapportées sur le socle 101 en engageant les rebords 107, 108 de ces parties de couvercle dans les bourrelets ménagés le long des bords longitudinaux 102, 103 du socle 101. Les bords sectionnés 111, 112 viennent au contact du bord 59 de la branche 57 de la barrette 55, 56 correspondante, de sorte qu'aucun jour ne subsiste entre les parties 109, 110 du couvercle 106 et les barrettes 55, 56 du support selon l'invention.

Le couvercle 106 vient en appui sur la patte 68 qui empêche son affaissement.

Le capot 2 est enfin rapporté sur la platine 1. Une partie avant des appareillages 200 traverse la plaque de façade 30 du capot 2 au travers de la fenêtre 54 de cette plaque, de telle sorte que les faces avant 202 de ces appareillages sont directement accessibles de l'extérieur du support (qui constitue alors un boîtier clos).

La fixation du capot 2 sur la platine 1 est réalisée par le double encliquetage, rapide et fiable, des pattes 42, 43 du capot 2 dans les logements 46, 47 de la platine 1, comme expliqué précédemment en référence à la figure 3.

Dans cette configuration finale, les bords 40, 41 des côtés opposés 36, 37 du capot 2 sont en butée contre ou affleurent la branche 57 des barrettes 55, 56. L'autre branche 58 de ces barrettes forme un retour qui remonte derrière les côtés opposés 36, 37 du capot 2 pour former une chicane évitant l'apparition de tout jour entre le capot 2 et les parties 109, 110 du couvercle 106 de la goulotte 100 et assurant ainsi en quelque sorte la "jointure" du capot 2 avec le couvercle 106.

En outre, on notera que les bords 38, 39 des deux autres côtés opposés 34, 35 de la jupe 33 du capot 2 affleurent quant à eux les bords longitudinaux 102, 103 du socle 101 de la goulotte 100.

## Revendications

1. Support pour le montage d'au moins un appareillage électrique (200) sur une goulotte (100) pour câbles et/ou conducteurs, cette goulotte comprenant un socle (101) à profil en forme générale de C ayant deux bords longitudinaux libres (102, 103) et le support comportant une embase (1) pourvue de moyens (26, 27, 70, 71) pour sa fixation sur le socle (101) de la goulotte (100) et de moyens de réception (25) de l'appareillage (200), l'embase (1), avec ses moyens de fixation (26, 27, 70, 71) et ses moyens de réception (25), étant réalisée en une seule pièce sous la forme d'une platine ayant deux premiers bords opposés (4, 5) sur lesquels est ménagée au moins une première partie (26, 27) des moyens de fixation qui coopère avec les bords longitudinaux libres (102, 103) du socle (101) de la goulotte (100), une face inférieure (9) qui, après fixation du support sur le socle (101) de la goulotte, est située en regard dudit socle, et une face supérieure (8) opposée sur laquelle sont ménagés les moyens de réception (25), **caractérisé en ce que** lesdits moyens de réception sont réalisés sous la forme d'au moins un rail (25) venu de matière avec le reste de la platine (1), en saillie de la face supérieure (8) de celle-ci, et **en ce qu'**auxdits deux premiers bords opposés (4, 5) de ladite platine (1) sont ménagées deux ailes (10, 11) s'étendant perpendiculairement à et en saillie de ladite face supérieure (8) de ladite platine (1) et présentant une face intérieure (12, 13) et une face extérieure (14, 15) qui porte ladite première partie (26, 27) des moyens de fixation.

2. Support selon la revendication 1, **caractérisé en ce que** la première partie des moyens de fixation est réalisée sous la forme de moyens de rainure (26, 27) ménagés sur chacun des deux premiers bords opposés (4, 5) de la platine (1) pour venir en prise avec les bords longitudinaux libres (102, 103) du socle (101) de la goulotte (100).

3. Support selon l'une des revendications 1 ou 2, **caractérisé en ce que** le rail de réception (25) s'étend perpendiculairement aux deux premiers bords opposés (4, 5) de la platine (1) sur lesquels est ménagée la première partie (26, 27) des moyens de fixation.

4. Support selon l'une des revendications 1 à 3, **caractérisé en ce que** les rails de réception (25) s'étendent entre les faces intérieures (12, 13) des ailes (10, 11) de la platine (1).

5. Support selon la revendication 4, **caractérisé en ce que** la première partie (26, 27) des moyens de fixation est constituée par deux séries de pattes (20, 21, 22, 23) venues de matière en saillie de la face extérieure (14, 15) de chacune des ailes (10, 11) de la platine (1), suivant deux plans parallèles à la platine (1) et distants l'un de l'autre d'une hauteur d'écartement correspondant sensiblement à l'épaisseur des bords longitudinaux libres (102, 103) du socle (101) de la goulotte (100).

6. Support selon l'une des revendications précédentes, **caractérisé en ce que**, la platine possédant deux seconds bords opposés (6, 7) sensiblement perpendiculaires à ses deux premiers bords opposés (4, 5), les moyens de fixation de la platine (1) sur le socle (101) de la goulotte (100) comportent une seconde partie qui est ménagée au voisinage des seconds bords opposés (6, 7) de cette platine.

7. Support selon la revendication 6, **caractérisé en ce que** la seconde partie des moyens de fixation est réalisée sous la forme de moyens de rainure (70, 71) ménagés au voisinage de et parallèlement à chacun des deux seconds bords opposés (6, 7) de la platine (1) pour venir en prise avec les bords longitudinaux libres (102, 103) du socle (101) de la goulotte (100).

8. Support selon l'une des revendications 6 ou 7, **caractérisé en ce que** la seconde partie (70, 71) des moyens de fixation est ménagée aux extrémités des ailes (10, 11) de la platine (1).

9. Support selon l'une des revendications 6 à 8, **caractérisé en ce que** les deux ailes (10, 11) de la platine (1) possèdent des extrémités (16, 17, 18, 19) qui débordent des seconds bords opposés (6, 7) de cette platine pour ménager entre elles des passages pour les câbles à raccorder aux appareillages (200).

10. Support selon l'une des revendications précédentes, **caractérisé en ce qu'**il comporte un capot (2) en forme de cloche sensiblement parallélépipédique comprenant une plaque de façade rectangulaire (30) bordée par une jupe (33) ayant quatre côtés opposés deux à deux, dont deux côtés opposés (34, 35) possédant un bord libre (38, 39) pourvu de moyens d'encliquetage (42, 43) agencés pour coopérer avec des moyens d'encliquetage homologues (46, 47) ménagés sur la platine (1), d'un seul tenant avec celle-ci.

11. Support selon la revendication 10, **caractérisé en ce que** les moyens d'encliquetage (46, 47) de la platine (1) sont portés par les ailes (10, 11) de la platine.

12. Support selon la revendication 11, **caractérisé en ce que** les moyens d'encliquetage du capot (2) comportent, pour chacun des côtés opposés de la jupe dudit capot, au moins une patte (42, 43) ayant une extrémité libre en forme de dent (44, 45) agencée pour être reçue dans un logement (46, 47) correspondant ménagé sur le bord correspondant (4, 5) de la platine (1), ce logement comportant un côté (48) dans lequel est ménagée une encoche (49) avec laquelle la dent (44) de ladite patte (42, 43) vient en prise et un côté opposé (50) pourvu d'une lame de rappel élastique (51) agissant sur ladite patte (42, 43) pour maintenir la dent (44) en prise dans l'encoche (49).

13. Support selon la revendication 12, **caractérisé en ce que** la lame de rappel élastique (51) possède une extrémité (52) présentant une face oblique (52.1) coopérant avec le bord correspondant d'un évidement (53) ménagé dans la patte (42, 43) du capot pour exercer une fonction de double rattrapage de jeu, à la fois parallèlement au plan de la platine (1) et perpendiculairement à ce plan.

14. Support selon l'une des revendications 10 à 13, prise en dépendance de la revendication 9, **caractérisé en ce que**, la goulotte comportant un couvercle (106) en forme de bande ayant des bords longitudinaux (107, 108) joints aux bords longitudinaux libres (102, 103) du socle (101) de la goulotte, le support comporte deux barrettes (55, 56) s'étendant entre les extrémités (16, 17, 18, 19) des ailes (10, 11) de la platine (1), le long et à distance des seconds bords opposés (6, 7) de la platine, pour réaliser une jointure entre le capot (2) et le couvercle (106) de la goulotte (100) tout en laissant libre au moins une partie des passages de câbles.

15. Support selon la revendication 14, **caractérisé en ce que** chacune des barrettes (55, 56) est constituée par une cornière comprenant une branche (58) engagée derrière le bord libre (40, 41) du côté correspondant (36, 37) du capot (2) et une seconde branche (57) ayant un bord longitudinal (59) de contact avec le bord transversal terminal (111, 112) du couvercle (106) de la goulotte (100).

16. Support selon l'une des revendications 14 et 15, **caractérisé en ce que** chacune des barrettes (55, 56) possède des extrémités pourvues de moyens d'emboîtement (63, 64) coopérant avec des moyens d'emboîtement homologues (65, 66) ménagés sur les extrémités (16, 17, 18, 19) des ailes (10, 11) de la platine (1).

## Claims

1. A support for mounting at least one item of electrical equipment (200) on a duct (100) for cables and/or conductors, said duct comprising a base (101) of a generally C-shaped profile having two free longitudinal edges (102, 103) and the support comprising a base portion (1) provided with means (26, 27, 70, 71) for fixing thereof on the base (101) of the duct (100) and means (25) for receiving the item of equipment (200), the base portion (1) with its fixing means (26, 27, 70, 71) and its receiving means (25) being made in one piece in the form of a plate having two opposite first edges (4, 5) on which is provided at least a first part (26, 27) of the fixing means, that co-operates with the free longitudinal edges (102, 103) of the base (101) of the duct (100), a lower face (9) which after fixing of the support on the base (101) of the duct is disposed in facing relationship with said base and an upper opposite face (8) on which are provided the receiving means (25), **characterised in that** said receiving means are made in the form of at least one rail (25) integral with the rest of the plate (1) in projecting relationship from the upper face (8) thereof, and that provided at said two opposite first edges (4, 5) of said plate (1) are two limbs (10, 11) extending perpendicularly to and in projecting relationship from said upper face (8) of said plate (1) and having an internal face (12, 13) and an external face (14, 15) which carries said first part (26, 27) of the fixing means.

2. A support according to claim 1 **characterised in that** the first part of the fixing means is in the form of groove means (26, 27) provided on each of the two opposite first edges (4, 5) of the plate (1) to come into engagement with the free longitudinal edges (102, 103) of the base (101) of the duct (100).

3. A support according to one of claims 1 and 2 **characterised in that** the receiving rail (25) extends perpendicularly to the two opposite first edges (4, 5) of the plate (1), on which edges the first part (26, 27) of the fixing means is provided.

4. A support according to one of claims 1 to 3 **characterised in that** the receiving rails (25) extend between the internal faces (12, 13) of the limbs (10, 11) of the plate (1).

5. A support according to claim 4 **characterised in that** the first part (26, 27) of the fixing means is formed by two series of lugs (20, 21, 22, 23) integral in projecting relationship from the external face (14, 15) of each of the limbs (10, 11) of the plate (1) in two planes parallel to the plate (1) and spaced from each other by a spacing height corresponding substantially to the thickness of the free longitudinal edges (102, 103) of the base (101) of the duct (100).

6. A support according to one of the preceding claims **characterised in that**, the plate having two opposite second edges (6, 7) substantially perpendicular to its two opposite first edges (4, 5), the means for fixing the plate (1) on the base (101) of the duct (100) comprise a second part provided in the vicinity of the opposite second edges (6, 7) of said plate.

7. A support according to claim 6 **characterised in that** the second part of the fixing means is in the form of groove means (70, 71) provided in the vicinity of and parallel to each of the two opposite second edges (6, 7) of the plate (1) to come into engagement with the free longitudinal edges (102, 103) of the base (101) of the duct (100).

8. A support according to one of claims 6 and 7 **characterised in that** the second part (70, 71) of the fixing means is provided at the ends of the limbs (10, 11) of the plate (1).

9. A support according to one of claims 6 to 8 **characterised in that** the two limbs (10, 11) of the plate (1) have ends (16, 17, 18, 19) which extend beyond the opposite second edges (6, 7) of said plate to provide between them passages for the cables to be connected to the items of equipment (200).

10. A support according to one of the preceding claims **characterised in that** it comprises a cap (2) in the form of a substantially parallelepipedic bell comprising a rectangular front plate portion (30) bordered by a skirt (33) having four sides in opposite two-by-two relationship of which two opposite sides (34, 35) have a free edge (38, 39) provided with latching means (42, 43) arranged to co-operate with homologous latching means (46, 47) provided on the plate (1) in one piece therewith.

11. A support according to claim 10 **characterised in that** the latching means (46, 47) of the plate (1) are carried by the limbs (10, 11) thereof.

12. A support according to claim 11 **characterised in that** the latching means of the cap (2) comprise, for each of the two opposite sides of the skirt of said cap, at least one lug (42, 43) having a free tooth-shaped end (44, 45) arranged to be received in a corresponding housing (46, 47) provided on the corresponding edge (4, 5) of the plate (1), said housing comprising a side (48) in which there is disposed a notch (49) with which the tooth (44) of said lug (42, 43) comes into engagement and an opposite side (50) provided with a resilient return tongue (51) acting on said lug (42, 43) to hold the tooth (44) in engagement in the notch (49).

13. A support according to claim 12 **characterised in that** the resilient return tongue (51) has an end (52) having an inclined face (52.1) co-operating with the corresponding edge of a recess (53) in the lug (42, 43) of the cap to perform a double play take-up function both parallel to the plane of the plate (1) and perpendicularly to said plane.

14. A support according to one of claims 10 to 13 in dependence on claim 9 **characterised in that**, the duct comprising a cover (106) in the form of a strip having longitudinal edges (107, 108) joined to the free longitudinal edges (102, 103) of the base (101) of the duct, the support comprises two bar portions (55, 56) extending between the ends (16, 17, 18, 19) of the limbs (10, 11) of the plate (1) along and at the spacing of the opposite second edges (6, 7) of the plate to provide a join between the cap (2) and the cover (106) of the duct (100) while leaving at least a part of the passages for the cables free.

15. A support according to claim 14 **characterised in that** each of the bar portions (55, 56) is formed by an angle member comprising an arm (58) engaged behind the free edge (40, 41) of the corresponding side (36, 37) of the cap (2) and a second arm (57) having a longitudinal edge (59) for contact with the terminal transverse edge (111, 112) of the cover (106) of the duct (100).

16. A support according to one of claims 14 and 15 **characterised in that** each of the bar portions (55, 56) has ends provided with engagement means (63, 64) co-operating with homologous engagement means (65, 66) on the ends (16, 17, 18, 19) of the limbs (10, 11) of the plate (1).

## Patentansprüche

1. Halter zur Montage wenigstens eines elektrischen Installationsgeräts (200) auf einem Kabelkanal (100) für Kabel und/oder Leitungen, wobei der Kabelkanal einen Sockel (101) mit einem allgemein C-förmigem Profil aufweist, der zwei freie Längsränder (102, 103) hat, und wobei der Halter eine Befestigungsfläche (1) aufweist, die mit Mitteln (26, 27, 70, 71) zu seiner Befestigung auf dem Sockel (101) des Kabelkanals (100) und mit Mitteln (25) zur Aufnahme des Installationsgeräts (200) versehen ist, wobei die Befestigungsfläche (1) mit ihren Befestigungsmitteln (26, 27, 70, 71) und ihren Aufnahmemitteln (25) aus einem Stück in Form einer Platte ausgeführt ist, mit zwei ersten sich gegenüberliegenden Rändern (4, 5), auf denen wenigstens ein erster Teil (26, 27) der Befestigungsmittel ausgebildet ist, der mit den freien Längsrändern (102, 103) des Sockels (101) des Kabelkanals (100) zusammenwirkt, mit einer Unterseite (9), die nach Befestigung des Halters auf dem Sockel (101) des Kabelkanals dem Sockel gegenüberliegt, und mit einer entgegengesetzt angeordneten Oberseite (8), auf der die Aufnahmemittel (25) ausgebildet sind,
**dadurch gekennzeichnet, dass** die Aufnahmemittel in Form wenigstens einer mit der restlichen Platte (1) materialeinheitlich ausgeführten Schiene (25) an der Oberseite (8) vorstehend ausgeführt sind, und dass an den beiden ersten sich gegenüberliegenden Rändern (4, 5) der Platte (1) zwei Schenkel (10, 11) angeordnet sind, die senkrecht zur Oberseite (8) der Platte (1) und an dieser vorstehend verlaufen und eine Innenseite (12, 13) und eine Außenseite (14, 15) aufweisen, die mit dem ersten Teil (26, 27) der Befestigungsmittel versehen ist.

2. Halter nach Anspruch 1,
**dadurch gekennzeichnet, dass** der erst Teil der Befestigungsmittel in Form von Einkerbungsmitteln (26, 27) ausgeführt ist, die auf jedem der beiden sich gegenüberliegenden Ränder (4, 5) der Platte (1) ausgebildet sind, um mit den freien Längsrändern (102, 103) des Sockels (101) des Kabelkanals (100) in Eingriff zu gelangen.

3. Halter nach einem der Ansprüche 1 oder 2,
**dadurch gekennzeichnet, dass** die Aufnahmeschiene (25) senkrecht zu den beiden ersten sich gegenüberliegenden Rändern (4, 5) der Platte (1) verläuft, auf denen der erste Teil (26, 27) der Befestigungsmittel ausgebildet ist.

4. Halter nach einem der Ansprüche 1 bis 3,
**dadurch gekennzeichnet, dass** die Aufnahmeschienen (25) zwischen den Innenseiten (12, 13) der Schenkel (10, 11) der Platte (1) verlaufen.

5. Halter nach Anspruch 4,
**dadurch gekennzeichnet, dass** der erste Teil (26, 27) der Befestigungsmittel von zwei Reihen materialeinheitlich ausgebildeten Klammern (20, 21, 22, 23) gebildet ist, die an der Außenseite (14, 15) eines jeden Schenkels (10, 11) der Platte (1) gemäß zwei zur Platte (1) parallelen Ebenen vorstehen, die voneinander mit einer Abstandshöhe beabstandet sind, die im Wesentlichen der Dicke der freien Längsränder (102, 103) des Sockels (101) des Kabelkanals (100) entspricht.

6. Halter nach einem der vorhergehenden Ansprüche,
**dadurch gekennzeichnet, dass**, da die Platte zwei zweite sich gegenüberliegende Ränder (6, 7) besitzt, die im Wesentlichen senkrecht zu ihren beiden ersten sich gegenüberliegenden Rändern (4, 5) verlaufen, die Befestigungsmittel der Platte (1) auf dem Sockel (101) des Kabelkanals (100) einen zweiten Teil aufweisen, der in der Nähe der zweiten sich gegenüberliegenden Ränder (6, 7) der Platte ausgebildet ist.

7. Halter nach einem der vorhergehenden Ansprüche,
**dadurch gekennzeichnet, dass** der zweite Teil der Befestigungsmittel in Form von Einkerbungsmitteln (70, 71) ausgeführt ist, die in der Nähe und parallel zu jedem der beiden zweiten sich gegenüberliegenden Ränder (6, 7) der Platte (1) ausgebildet sind, um mit den freien Längsrändern (102, 103) des Sockels (101) des Kabelkanals (100) in Eingriff zu gelangen.

8. Halter nach einem der Ansprüche 6 oder 7,
**dadurch gekennzeichnet, dass** der zweite Teil (70, 71) der Befestigungsmittel an den Enden der Schenkel (10, 11) der Platte (1) ausgebildet ist.

9. Halter nach einem der Ansprüche 6 bis 8,
**dadurch gekennzeichnet, dass** die beiden Schenkel (10, 11) der Platte (1) Enden (16, 17, 18, 19) besitzen, die über die zweiten sich gegenüberliegenden Ränder (6, 7) der Platte hinausstehen, um miteinander Durchgänge für die an die Installationsgeräte (200) anzuschließenden Kabel zu bilden.

10. Halter nach einem der vorhergehenden Ansprüche,
**dadurch gekennzeichnet, dass** er eine Abdeckung (2) in Form einer im Wesentlichen parallelepipedischen Haube aufweist, mit einer rechteckigen Frontplatte (30), die von einer Verkleidung (33) mit vier sich paarweise gegenüberliegenden Seiten gesäumt ist, von denen zwei sich gegenüberliegende Seiten (34, 35) einen freien Rand (38, 39) besitzen, der mit Rastmitteln (42, 43) versehen ist, die zum Zusammenwirken mit homologen, auf der Platte (1) einstückig mit dieser ausgebildeten Rastmitteln (46, 47) angeordnet sind.

11. Halter nach Anspruch 10,
**dadurch gekennzeichnet, dass** die Rastmittel (46, 47) der Platte (1) von den Schenkeln (10, 11) der Platte getragen sind.

12. Halter nach Anspruch 11,
**dadurch gekennzeichnet, dass** die Rastmittel der Abdeckung (2) für jede der beiden sich gegenüberliegenden Seiten der Verkleidung der Abdeckung wenigstens eine Klammer (42, 43) mit einem freien Ende in Form eines Zahns (44, 45) aufweisen, der angeordnet ist, um in einer entsprechenden Aufnahme (46, 47) aufgenommen zu werden, die auf dem entsprechenden Rand (4, 5) der Platte (1) ausgebildet ist, wobei die Aufnahme eine Seite (48) aufweist, in der eine Aussparung (49) ausgebildet ist, mit der der Zahn (44) der Klammer (42, 43) in Eingriff gelangt, sowie eine gegenüberliegende Seite (50), die mit einem Federblatt (51) versehen ist, das auf die Klammer (42, 43) einwirkt, um den Zahn (44) in Eingriff mit der Aussparung (49) zu halten.

13. Halter nach Anspruch 12,
**dadurch gekennzeichnet, dass** das Federblatt (51) ein Ende (52) besitzt, das eine schräge Seite (52.1) aufweist, die mit dem entsprechenden Rand einer Ausnehmung (53) zusammenwirkt, die in der Klammer (42, 43) der Abdeckung ausgebildet ist, um die Funktion einer zweifachen Spielverringerung zu erfüllen, nämlich sowohl parallel zur Ebene der Platte (1) als auch senkrecht zu dieser Ebene.

14. Halter nach einem der Ansprüche 10 bis 13, in Abhängigkeit von Anspruch 9,
**dadurch gekennzeichnet, dass** der Halter, da der Kabelkanal einen Deckel (106) in Form einer Leiste mit Längsrändern (107, 108) aufweist, die mit den freien Längsrändern (102, 103) des Sockels (101) des Kabelkanals verbunden sind, zwei Stege (5, 56) aufweist, die sich zwischen den Enden (16, 17, 18, 19) der Schenkel (10, 11) der Platte (1) längs der und mit Abstand zu den zweiten sich gegenüberliegenden Ränder (6, 7) der Platte erstrecken, um eine Verbindung zwischen der Abdeckung (2) und dem Deckel (106) des Kabelkanals (100) herzustellen, wobei ein Teil der Kabeldurchgänge jedoch frei bleibt.

15. Halter nach Anspruch 14,
**dadurch gekennzeichnet, dass** jeder der Stege (55, 56) von einem Winkel gebildet ist, der einen hinter den freien Rand (40, 41) der entsprechenden Seite (36, 37) der Abdeckung (2) eingefügten Schenkel (58) und einen zweiten Schenkel (57) mit einem Längsrand (59) aufweist, der in Kontakt mit dem quer laufenden Endrand (111, 112) des Deckels (106) des Kabelkanals (100) ist.

16. Halter nach einem der Ansprüche 14 oder 15,
**dadurch gekennzeichnet, dass** jeder der Stege (55, 56) Enden besitzt, die mit Steckmitteln (63, 64) versehen sind, welche mit homologen Steckmitteln (65, 66) zusammenwirken, die auf den Enden (16, 17, 18, 19) der Schenkel (10,11) der Platte (1) ausgebildet sind.
